Europäisches Patentamt

European Patent Office

Office européen des brevets

(11) Publication number: **0 313 159**
**A1**

# EUROPEAN PATENT APPLICATION

(21) Application number: 88202314.6

(22) Date of filing: 17.10.88

(51) Int. Cl.⁴: **B65D 1/40 , B65D 25/32**

(30) Priority: 21.10.87 NL 8702509

(43) Date of publication of application:
26.04.89 Bulletin 89/17

(84) Designated Contracting States:
AT BE CH DE ES FR GB GR IT LI LU NL SE

(71) Applicant: STAMICARBON B.V.
Mijnweg 1
NL-6167 AC Geleen(NL)

(72) Inventor: Van Raalte, Cornelis
Welysestraat 9
NL-6669 DG Dodewaard(NL)

(54) Preform for a container.

(57) Preform for blow moulding a container from plastic comprising a circumference portion (2) that is not and a central portion (1) that is given a different shape during the blow moulding, the circumference portion (2) being provided with means (3, 4, 5, 6, 7) for the sealing and/or locking interaction with a lid compatible with the container, a depending skirt (10) present along its outer circumference, radial inwardly projecting ribs (14) in the corner between the underside of the circumference portion (2) and the skirt (10) and means for securing the ends of a bail. In the skirt two diametrically opposed openings (17, 17') are present and the radial ribs are so placed that on either side of each opening a rib (15, 15', 16, 16') is provided while forming a bail end cavity (24).

FIG.6

# PREFORM FOR A CONTAINER

The invention relates to a preform for blow moulding a container from plastic comprising a circumference portion that is not and a central portion that is given a different shape during the blow moulding, the circumference portion being provided with means for the sealing and/or locking interaction with a lid compatible with the container, a depending skirt present along the outer circumference, radial inwardly projecting ribs in the corner between the underside of the circumference portion and the skirt and means for securing the ends of a bail.

Such a preform is known from the American patent specification 4,367,821, and so is a container produced by means of that preform. The advantages which such a container offers have been elucidated in detail in that patent specification.

What is felt to be a serious disadvantage of the known container is that the bail ears, the rather wide gap between the preform and the blow moulded portion of the container and the presence of ribs and lid sealing lip in the top portion of the lateral surface interfere with the lateral printing or label attachment area.

The long-existing wishes of consumer organizations and the statutory provisions in respect of the supply of information regarding the composition and the weight of the packed goods, as well as of the directions for use and safety instructions to be observed require that the printing or label attachment area should be as large as possible.

The object of the invention is to provide a preform for blow moulding a container completely or virtually completely eliminating the said disadvantages by taking such measures as will lead, separately or in combination, to an increase of the printing or label attachment area and, moreover, to greater ease of printing and labelling.

The said object is achieved in that in the skirt two diametrically opposed openings are present and in that the radial ribs are so placed that on either side of each opening a rib is provided while forming a bail end cavity.

A preform of such design makes it possible for the exterior surface of the finished container to show just two small openings instead of the projecting ears of the known containers. These small openings can easily be incorporated in the empty spaces in the lay-out of a text printed on the container and do not interfere with the application of a printed label onto the container.

It is an advantage for the ribs on either side of the bail end openings to be provided at some, but equal, distance from the openings. The bail ends, after being pressed through the openings, will then meet adequate resistance all around against dislodgement, while an embodiment to be discussed later on will come out better also.

Under certain circumstances it may be well-advised to provide the ribs on either side of the openings with a connecting wall. This will prevent the re-moulded central portion from taking away too much space between the ribs in the blow moulding process, leaving too little space for the bail end.

In order to avoid sink marks in those parts of the exterior surface of the preform where on the interior surface the radial ribs are provided, which sink marks interfere with the printing, it is to be recommended to apply these ribs at some distance from the interior surface of the depending skirt. This can be achieved by connecting these ribs with the circumference portion only. In order yet to continue to maintain the rigidity of the mouth portion, it is not only the radial ribs on either side of the openings that can be connected by connecting walls, but all ribs can be connected by a connecting wall, so that within the said skirt a second depending skirt is provided as it were.

The free edge of the depending skirt may be bevelled from the interior surface to the exterior surface into the direction of the bottom of the container to be formed. Thus the gap between the preform and the blow moulded wall can be narrowed, so that it will be easier for this gap to be incorporated in the lay-out of the print and a label cannot be pressed into the gap upon application, which may cause the label to become torn and consequently the text to become illegible.

The complete elimination of a gap between the preform and the blow moulded wall of the container can be achieved by allowing the skirt to extend to the bottom of the container to be formed. This also offers the advantage that in any case the central portion may be allowed to consist of a plastic different from the rest of the preform. Thus, for the skirt, a plastic with good printing properties may be used and/or a plastic better suited to resist the forces of distortion exerted by the bail ends on the skirts of particularly containers with high holding capacities, whereas for the container proper a plastic can be used with optimum properties for the packing of its contents including, for instance, barrier properties.

Apart from protective ribs present round the top and bottom on the exterior surface of the container, it is an advantage in the printing or labelling for the container to have the same outer circumference over its full height. It is an advantage, therefore, for the circumference portion of the preform to have an outer wall with an exterior surface situated in the same plane as the exterior surface of the depending skirt. This can be achieved, for instance, by having the circumference portion designed in conformity with the top portion of the container as described in applicant's non-published Netherlands patent application 8601917 filed on 24th July 1987 and discussed in more detail in the elucidation of the typical embodiment to follow.

Above, mention was made already of ribs present on the exterior surface of the container, along the top and bottom of the finished container. As in the case of tin containers, these ribs must prevent containers placed side by side from causing damage to each other's printings or labels, which would be made illegible. The said ribs keep the printed or labelled surfaces away from each other. In order to achieve the same effect with the containers according to the present invention, the exterior surface of the circumference portion at the mouth end may be provided all around with a rib and the finished container may be provided all around with a rib on its exterior surface at the bottom. The latter rib is formed by a corresponding shape of the blow mould.

Containers provided with a bail may have to be printed or labelled. In order to prevent these operations from being interfered with by the presence of bails hanging down alongside the areas to be printed or labelled, it may be an advantage for the bails to be capable of being fixed in a particular position. In order to make such fixation possible every bail end may have such a cross section as to cause at least one of the boundary walls of the bail end cavity and/or the bail end itself to be subjected to a non-permanent deformation during the rotation of the bail end when the bail is taken from an initial desired position to a second desired position. The ribs on either side of the bail end opening in this connection provide an excellent opportunity if an X-shaped bail end is provided in between, the distance between the tips being the same everywhere and virtually the same as the distance between two ribs.

The preform according to the invention is suited for producing a container with a round, an oval or a substantially rectangular radial cross section. A round radial cross section of the container, in other words a cylinder-shaped container, is best suited for printing or labelling on the conventional machines for cylindrical, tin containers.

The invention will be further elucidated below with reference to a typical embodiment shown in the drawing.

In the drawing

Fig. 1 is a top view of a preform according to the invention;

Fig. 2 is a bottom view of the preform of Fig. 1;

Fig. 3 is an axial cross section of the preform along line III-III in Fig. 1;

Fig. 4 is one half of an axial cross section of a finished container along line III-III in Fig. 1;

Fig. 5 is one half of an axial cross section of a finished container along line V-V in Fig. 1;

Fig. 6 is an axial cross section of one half of a preform and of one half of a finished container of a different design;

Fig. 7 is a cross section along line VII-VII in Fig. 6;

Fig. 8 is a side view of a part of a bail with bail end and

Fig. 9 is a front view of the bail end of Fig. 8.

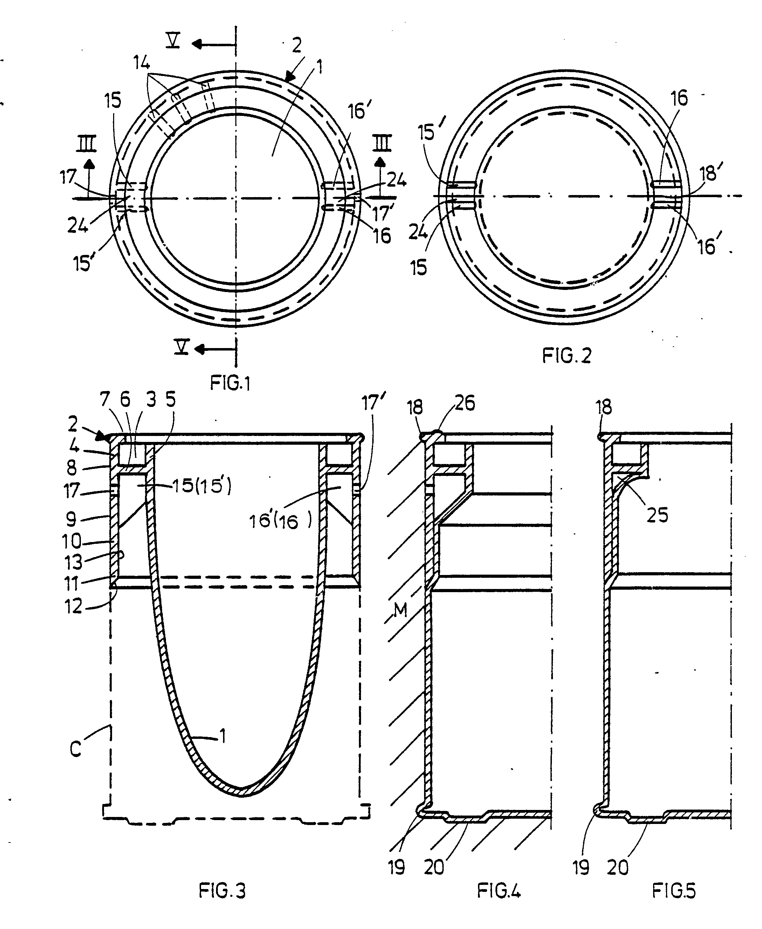

The preform drawn in Figs. 1 up to and including 3 has been obtained by injection moulding and in this case consists of polypropylene. The preform consists of a central portion 1 which, after it has been brought into a plastic state, is blow moulded to form a container body and of a circumference portion 2 which remains intact during the blow moulding and which has a provision for the sealing and/or locking interaction with a lid. This provision consists of a U-shaped channel 3 with an outer channel wall 4, an inner channel wall 5 and a bottom 6. The outer channel wall 4 is provided with an interior rib 7.

The cylindrical exterior surface 8 of circumference portion 2, in this case the outside of the outer channel wall 4, passes into the exterior surface 9 of a cyclindrical skirt 10 applied according to the invention to circumference portion 2, the skirt having on its free edge 11 a bevel 12 between the interior surface 13 and the exterior surface 9. Parts 4, 5, 6 and 10 essentially represent the top portion of an embodiment of a container disclosed in the so far non-published Netherlands patent application 8601917 referred to earlier in the specification.

In Fig. 1 the dotted lines 14 represent a few radial ribs present in the corner between the underside of circumference portion 2 and skirt 10 round the preform.

As indicated in the drawing by 15, 15', 16 and 16', there are two pairs of ribs connected to the circumference portion and diametrically opposed to each other with openings 17 and 17' provided in between in the skirt for incorporating the ends of a bail (not drawn).

In Fig. 3 the broken line indicated by C is a diagrammatic representation for the purpose of making clear the contours of the container to be formed.

On the preform is provided, along its top edge, a protective rib 18 protecting, together with a blow moulded rib 19 on the bottom edge of the blow moulded container, the lateral surface in between when two or more containers are placed side by side and against each other.

On the underside of the moulded container are provided bottom ribs 20 fitting in grooves of a (non-drawn) lid suited for the container.

Skirt 10 may also reach down to the bottom of the container to be formed. Protective rib 19 can then be injection moulded onto the preform.

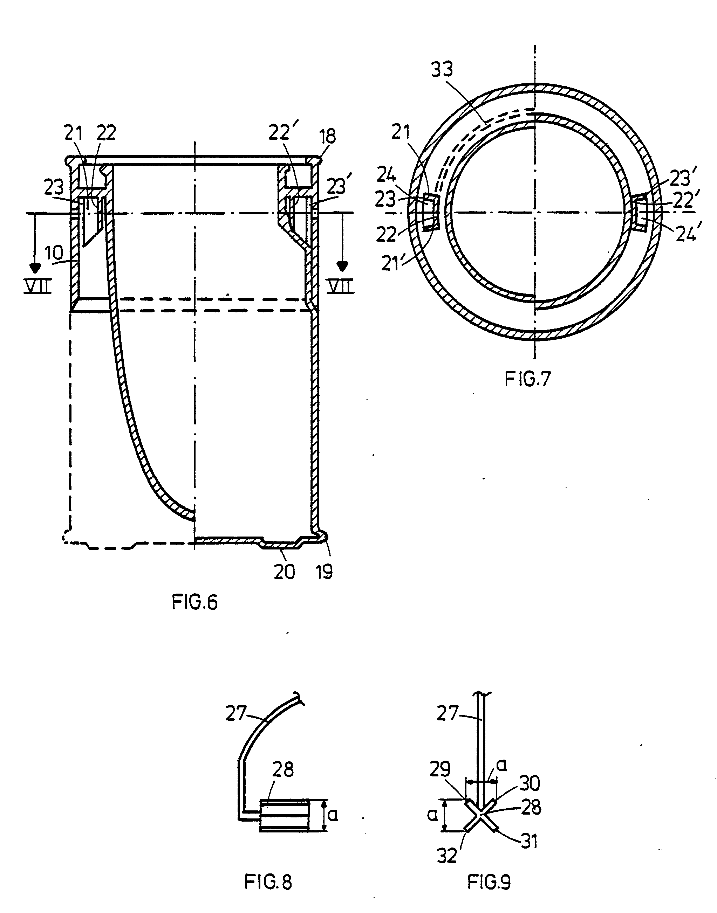

In Figs. 6 and 7 an embodiment is shown in which the radial ribs 21 and 21′ are connected by connecting walls 22 and 22′. All radial ribs, including those indicated in Fig. 1 by 14, can be connected by connecting walls so that a second depending skirt is formed as it were. In Fig. 7 such second skirt is shown in part with dotted lines 33. This may be of particular advantage if, as indicated in Figs. 6 and 7, the radial ribs are situated at some distance from skirt 10 while forming gaps 23 and 23′.

The container can be produced from the preform as follows. The preform is converted from its injection moulded state into a parison for blow moulding, the temperature of at least the central portion being such that this central portion can be re-shaped under pressure in a blow moulding step. For the production of a substantially cylindrical container the blow mould is cylinder-shaped with a radius equalling the radius of the cylinder-shaped preform. During the blow moulding process the central portion 1 lays itself as far as possible against the interior wall 13 of skirt 10 and against the rest of the interior wall of the blow mould shown diagrammatically in Fig. 4 with wide shading and indicated by M. Between ribs 15, 15′ and 16, 16′ bail end cavities 24 and 24′ will remain after the blow moulding. In Fig. 5, 25 indicates the space that would remain if connecting walls 22, 22′ were not present, or if in addition to ribs 15, 15′, 16, 16′ no further ribs had been provided.

If the skirt extends to the bottom of the container, there need be no bevelling. The space that can then, after the blow moulding, be formed along the periphery of the bottom can be utilized for incorporating a stacking rib 26 (see Fig. 4) provided at the top of the outer channel wall so that the stacked containers cannot shift horizontally in respect of each other. In that case bottom ribs 20 may be eliminated.

Fig. 8 and Fig. 9 represent respectively a side view and a front view of a possible embodiment for bail 27 with bail end 28. Bail end 28 is X-shaped with tips 29, 30, 31 and 32 with equal distances 'a' between adjoining tips, such distance 'a' being virtually equal to the distance between the radial ribs forming the boundary walls of bail end cavity 24.

## Claims

1. Preform for blow moulding a container from plastic comprising a circumference portion (2) that is not and a central portion (1) that is given a different shape during the blow moulding, the circumference portion (2) being provided with means (3, 4, 5, 6, 7) for the sealing and/or locking interaction with a lid compatible with the container, a depending skirt (10) present along its outer circumference, radial inwardly projecting ribs (14) in the corner between the underside of the circumference portion (2) and the skirt (10) and means for securing the ends of a bail, such preform being characterized in that in the skirt two diametrically opposed openings (17, 17′) are present and in that the radial ribs are so placed that on either side of each opening a rib (15, 15′, 16, 16′) is provided while forming a bail end cavity (24).

2. Preform according to claim 1, characterized in that the radial ribs (15, 15′, 16, 16′) on either side of each opening (17, 17′) are present at some, but equal, distance from the openings (17, 17′).

3. Preform according to claim 1 or 2, characterized in that at least the ribs on either side of each opening are connected at their radial ends by a connecting wall (22, 22′).

4. Preform according to any one of claims 1-3, characterized in that the radial ribs (15, 15′, 16, 16′) are present at some distance from the interior surface (13) of the depending skirt (10).

5. Preform according to any one of claims 1-4, characterized in that the exterior surface of the depending skirt (10) is situated in the same plane as an exterior surface (8) of an outer wall (4) of the circumference portion (2).

6. Preform according to any one of claims 1-5, characterized in that the free edge (11) of the depending skirt (10) has a bevel (12) from its interior surface (13) to its exterior surface (9) into the direction of the bottom of the container to be formed.

7. Preform according to any one of claims 1-6, characterized in that the skirt (10) extends as far as the bottom of the container to be formed.

8. Preform according to any one of claims 1-7, characterized in that at least the central portion (1) comprises a plastic different from that of the rest of the preform.

9. Preform according to any one of claims 1-8, characterized in that the exterior surface (8) of the circumference portion (2) is provided at the mouth end with a protective rib (18) all around.

10. Container produced by means of the preform according to any one of claims 1-9.

FIG.1

FIG.2

FIG.3

FIG.4

FIG.5

FIG.6

FIG.7

FIG.8

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | GB-A-2 084 106 (HOLT) <br> * Page 2, line 73 - page 3, line 31; figures 3-7 * <br> --- | 1,2,5 | B 65 D 1/40 <br> B 65 D 25/32 |
| A | NL-A-7 212 220 (TURNWALD) <br> * Page 4, line 10 - page 5, line 16; figures 1,2 * <br> --- | 1,2 | |
| A | US-A-4 399 926 (EIDELS-DUBOVOY) <br> * Column 2, lines 8-39; figures 1,3 * <br> --- | 1,9 | |
| A | US-A-4 215 789 (PFEIFER) <br> ----- | | |

TECHNICAL FIELDS SEARCHED (Int. Cl.4)

B 65 D
A 47 J
B 29 C

The present search report has been drawn up for all claims

| Place of search | Date of completion of the search | Examiner |
|---|---|---|
| THE HAGUE | 17-01-1989 | VANTOMME M.A. |

EPO FORM 1503 03.82 (P0401)